Europäisches Patentamt

European Patent Office

Office européen des brevets

(19)

(11) Numéro de publication: **0 135 421**
**B1**

(12) **FASCICULE DE BREVET EUROPEEN**

(45) Date de publication du fascicule du brevet:
**15.07.87**

(21) Numéro de dépôt: **84401563.6**

(22) Date de dépôt: **25.07.84**

(51) Int. Cl.⁴: **B 60 K 17/34**

(54) **Ensemble compact de transmission pour véhicule à deux essieux moteurs.**

(30) Priorité: **22.08.83 FR 8313554**

(43) Date de publication de la demande:
**27.03.85 Bulletin 85/13**

(45) Mention de la délivrance du brevet:
**15.07.87 Bulletin 87/29**

(84) Etats contractants désignés:
**DE GB IT**

(56) Documents cités:
**EP - A - 0 043 806**
**EP - A - 0 072 990**
**FR - A - 2 505 269**
**GB - A - 2 035 930**
**GB - A - 2 057 987**
**GB - A - 2 074 517**
**GB - A - 2 097 736**

(73) Titulaire: **AUTOMOBILES PEUGEOT, Société dite:,**
**75, Avenue de la Grande-Armée, F-75761 Paris**
**Cedex 16 (FR)**
Titulaire: **AUTOMOBILES CITROEN, 62 Boulevard**
**Victor-Hugo, F-92200 Neuilly-sur-Seine (FR)**

(72) Inventeur: **Sescousse, Daniel, Résidence du Sauies**
**"Villa Caline", F-95570 Bouffemont (FR)**

(74) Mandataire: **Moncheny, Michel et al, c/o Cabinet**
**Lavoix 2 Place d'Estienne d'Orves, F-75441 Paris**
**Cedex 09 (FR)**

ACTORUM AG

## Description

L'invention est relative aux ensembles de transmission reliant un arbre moteur tubulaire, notamment un arbre de sortie d'un groupe motopropulseur transversal de véhicule, d'une part à deux arbres récepteurs alignés coaxialement à l'arbre moteur, et notamment reliés respectivement aux deux roues d'un premier essieu du véhicule, d'autre part à un arbre récepteur tubulaire entourant l'un desdits arbres alignés et relié notamment par un couple conique d'engrenages à un arbre longitudinal d'entraînement des roues d'un deuxième essieu du véhicule.

Pour que ces trois arbres récepteurs soient entraînés alternativement suivant deux rapports de démultiplication et pour que leurs vitesses relatives puissent occasionnellement différer — les roues éventuellement associées d'un véhicule pouvant tourner à des vitesses légèrement différentes, par exemple en virage —, les ensembles de transmission en question comportent en général un premier train planétaire, réducteur à deux rapports, reliant l'arbre moteur au porte-satellites d'un second train planétaire, répartiteur de couple, dont le pignon planétaire et la couronne sont respectivement liés l'un à l'arbre récepteur tubulaire, l'autre auxdits arbres alignés par l'intermédiaire d'un troisième train planétaire jouant le rôle d'un différentiel.

Un tel ensemble de transmission est du type tel que defini dans le préambule de la revendication 1 et décrit par le FR-A-2 505 269.

Dans le cas d'un véhicule à groupe motopropulseur transversal, l'arbre tubulaire moteur sort du carter de ce groupe par un premier palier situé à proximité du plan longitudinal de symétrie du véhicule, et l'ensemble de transmission en question est compris, transversalement au véhicule, entre ce palier et un second palier traversé par l'un desdits arbres alignés, relié à la roue associée par un arbre de transmission articulé. Il est alors souhaitable d'une part que le couple conique soit proche du premier palier pour que l'arbre longitudinal soit sensiblement dans le plan de symétrie du véhicule, d'autre part que la distance entre les deux paliers soit relativement courte afin que ledit arbre de transmission soit suffisamment long pour que ses débattements angulaires ne soient pas excessifs quand les débattements verticaux de la roue associée sont importants.

Or, les ensembles de transmission du genre indiqué à trois trains planétaires sont habituellement encombrants en direction axiale, notamment parce que le troisième train est généralement un différentiel à engrenages coniques, et l'arbre tubulaire récepteur est en général situé axialement entre le premier et le troisième train. Cela nécessite, dans le cas précité d'un véhicule à arbre longitudinal sensiblement dans le plan de symétrie du véhicule, l'adjonction d'un arbre transversal intermédiaire, avec un couple d'engrenages supplémentaires, entre l'arbre tubulaire récepteur et l'arbre longitudinal.

L'invention a pour but de réaliser un ensemble de transmission du type précité, à trois trains planétaires, qui présente un faible encombrement axial et dont l'arbre récepteur tubulaire soit situé à l'extrémité axiale de l'ensemble tournée vers l'arbre moteur.

Selon l'invention, les trois trains étant plats, à engrenage cylindriques, et l'arbre tubulaire récepteur entourant l'arbre tubulaire moteur, le train récepteur est interposé axialement entre les deux autres trains, dont les couronnes dentées sont accouplées ou susceptibles de l'être, par une entretoise tubulaire entourant le train réducteur.

Suivant quelques caractéristiques avantageuses de l'invention:

— un manchon coulissant de commande du réducteur, c'est-à-dire solidaire du pignon planétaire ou de la couronne dentée du premier train et propre à être accouplé alternativement avec un autre élément de ce train ou avec une partie fixe, est interposé radialement entre les arbres tubulaires moteur et récepteur;

— le porte-satellites du train répartiteur comporte une denture périphérique propre à coopérer avec la couronne dentée de ce train, cette couronne étant coulissante;

— ladite couronne coulissante est soit monopièce avec l'entretoise et la couronne dentée du troisième train, soit reliée à l'entretoise par un moyen d'accouplement coulissant.

Deux exemples de réalisation d'un ensemble de transmission selon l'invention sont décrits ci-après, avec référence aux dessins annexés sur lesquels:

la figure 1 est une vue d'ensemble de dessus schématique d'un groupe motopropulseur équipé de l'ensemble de transmission;

la figure 2 est une vue partielle en coupe axiale de l'ensemble de transmission suivant un premier mode de réalisation;

et la figure 3 est une vue analogue suivant un second mode de réalisation.

On voit sur les figures, disposé entre deux paliers 1, 2 solidaires d'un groupe motopropulseur G d'un véhicule automobile, un ensemble de transmission E reliant un arbre tubulaire 3 sortant de ce groupe d'une part à deux arbres récepteurs 4, 5 alignés coaxialement à l'arbre moteur, d'autre part à un arbre récepteur tubulaire 6 entourant les arbres 3, 4 et relié à un arbre 7 perpendiculaire aux précédents par un couple conique d'engrenages 8 situé près du premier palier 1.

Les arbres 4 et 5, disposés transversalement dans le véhicule, sont respectivement reliés aux deux roues d'un premier essieu, par l'intermédiaire d'arbres de transmission articulés A au moyen de joints universels 9, et l'arbre 7 est disposé longitudinalement, sensiblement dans le plan de symétrie P du véhicule.

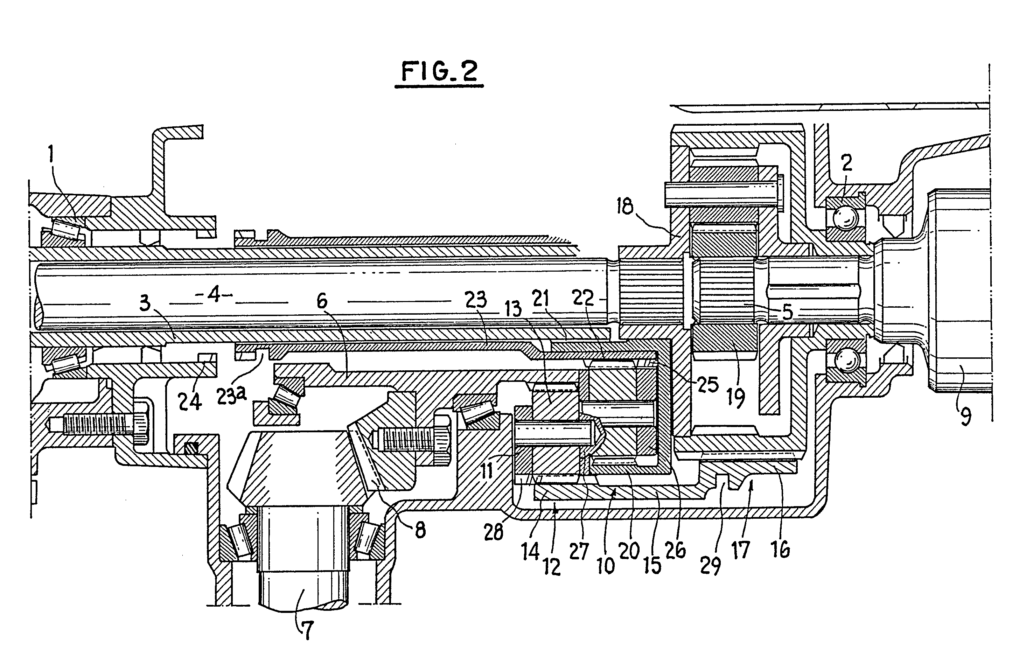

L'ensemble de transmission comporte trois trains planétaires plats, à engrenage cylindriques, coaxiaux à l'arbre moteur 3: dans le mode de réalisation de la figure 2, un premier train 10, réducteur à deux rapports, relie cet arbre 3 au porte-satellites 11 d'un second train 12, répartiteur de couple, dont le pignon planétaire 13 est solidaire de l'arbre récepteur tubulaire 6 et dont la couronne dentée 14 est accouplée, au moyen d'une entretoise tubulaire 15 entourant le premier train 10, à la couronne dentée 16 d'un troisième train 17. Celui-ci est constitué par un différentiel plat de type connu dont le porte-satellites 18 et le pignon planétaire 19 sont respectivement ancrés sur les arbres 4 et 5, autorisant d'éventuelles différences de vitesses entre ces arbres, donc entre les deux roues associées, par exemple en virage.

Le train réducteur 10 est axialement interposé entre les deux autres trains, et sa couronne dentée 20 est accouplée à l'arbre moteur 3 par des cannelures 21, tandis que son pignon planétaire 22 est solidaire d'un manchon coulissant 23 de commande interposé radialement entre les arbres tubulaires 3 et 6. Ce manchon 23 est propre à être craboté alternativement, selon qu'il est déplacé dans un sens ou dans l'autre au moyen d'une fourchette engagée dans une gorge 23a qu'il comporte, avec une denture fixe 24 ou avec une denture 23 du porte-satellites 26 du train 10. Celui-ci assure ainsi soit une réduction de vitesse, soit une transmission directe entre l'arbre moteur 3 de la porte-satellites 11, rendu solidaire de celui 26 du train 10 par un flasque intermédiaire 27.

Le porte-satellites 11 comporte une denture périphérique 28 susceptible de coopérer avec la denture de la couronne 14 lorsque l'entretoise tubulaire 15, qui en est solidaire, est déplacée vers la gauche par une fourchette de commande engagée dans une gorge 29 de la pièce 15. Dans ce cas, le train planétaire 12 est bloqué, c'est-à-dire que l'arbre 6 et l'entretoise 15 respectivement reliés à son pignon planétaire 13 et à sa couronne dentée 14 tournent en bloc à la même vitesse, évitant ainsi que les deux roues d'un essieu ne patinent ou ne se bloquent tant que les roues de l'autre essieu adhèrent correctement au sol. Quand l'entretoise 15 est au contraire déplacée vers la droite, la couronne dentée 14 est dégagée de la denture 28, et le train planétaire 12 joue le rôle d'un répartiteur de couple habituel, autorisant de légères différences de vitesse, par exemple en virage serré ou en roulage sur terrain très accidenté, entre les roues d'un essieu et celles de l'autre.

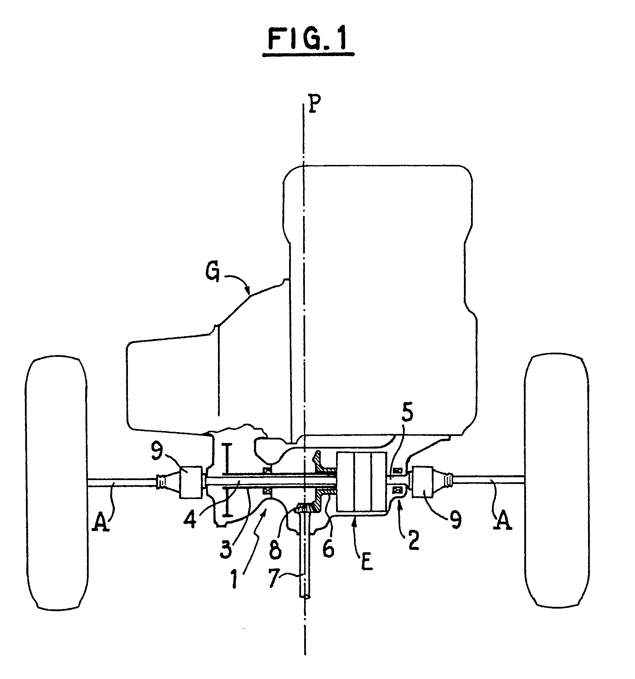

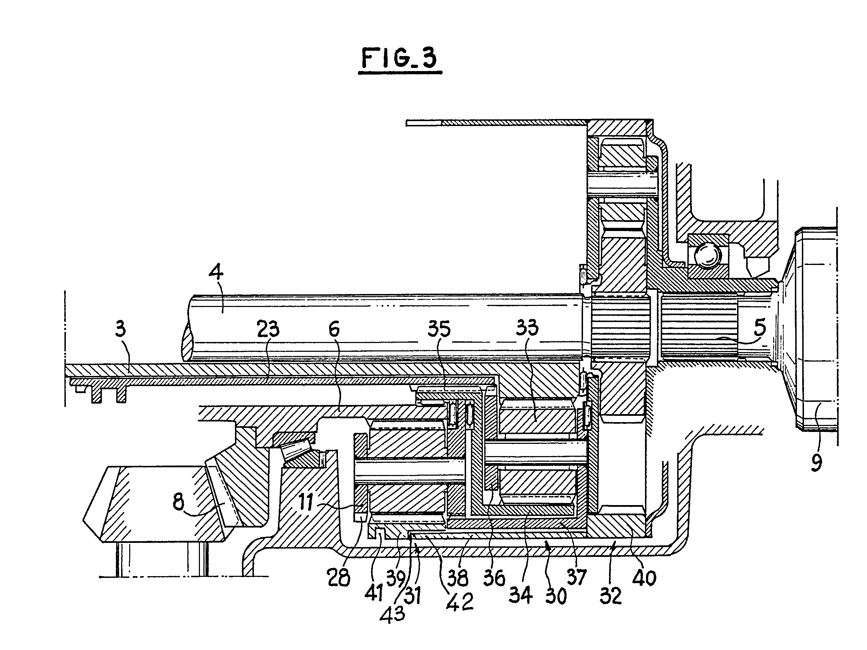

Dans le mode de réalisation de la figure 3, un train réducteur 30 est encore interposé entre un train répartiteur 31 et un train différentiel 32 selon la disposition générale de la figure 1, les trois trains étant plats. Mais ici le réducteur 30 réalise une plus forte démultiplication car son pignon planétaire 33 et sa couronne dentée 34 sont respectivement reliés, à l'inverse de la disposition précédente, à l'arbre moteur 3 et au manchon de commande 23. A cet effet, ce dernier est accouplé au moyen de la couronne 34 par des cannelures coulissantes 35. Le porte-satellites 36 du train réducteur 30 est ici rendu solidaire de celui 11 du train répartiteur 31 par un tambour 37 radialement interposé entre la couronne 34 et l'entretoise tubulaire 38 reliant les couronnes dentées 39, 40 des deuxième et troisième trains 31, 32.

Cette entretoise 38 est rigidement solidaire de la couronne 40 tandis qu'elle est accouplée à la couronne 39 par un moyen coulissant: l'extrémité correspondante de l'entretoise 38 est découpée en créneaux rectangulaires 42 s'engageant dans des encoches 43 de forme complémentaire pratiquées à la périphérie de la couronne 39. Celle-ci peut ainsi, tout en restant solidaire en rotation de l'entretoise 38 et de la couronne 40, coulisser vers la gauche, sous l'action d'une fourchette de commande engagée dans une gorge 41 qu'elle comporte, et coopérer avec la denture 28 du porte-satellites 11 pour bloquer quand on le désire le train répartiteur 31, comme dans le dispositif de la figure 2.

Comme le montre la description de ces deux modes de réalisation, la superposition axiale des trois trains plats, le réducteur étant placé au centre, non seulement procure une compacité permettant de rapprocher les paliers 1 et 2, l'arbre de transmission qui relie le joint universel 9 à la roue associée étant par suite assez long pour que ses débattements angulaires ne soient pas excessifs, mais aussi permet de relier directement l'arbre récepteur 6 à l'arbre longitudinal 7 au moyen d'un couple conique 8 situé près du palier 1 donc sensiblement dans le plan de symétrie du véhicule.

**Revendications**

1. Ensemble de transmission pour véhicule à deux essieux moteurs, reliant un arbre moteur tubulaire, notamment un arbre de sortie (3) d'un groupe motopropulseur transversal (G) de véhicule, d'une part à deux arbres récepteurs (4, 5) alignés coaxialement à l'arbre moteur (3), et notamment reliés respectivement aux deux roues d'un premier essieu du véhicule, d'autre part à un arbre récepteur tubulaire (6) entourant l'un des arbres alignés (4, 5), et relié notamment par un couple conique (8) d'engrenages à un arbre longitudinal (7) d'entraînement des roues d'un deuxième essieu du véhicule, cet ensemble comprenant un premier train planétaire (10, 30) réducteur à deux rapports, reliant l'arbre moteur (3) au porte-satellites (11) d'un second train (12, 31) répartiteur de couple, dont le pignon planétaire (13) et la couronne (14, 39) sont respectivement liés, l'un à l'arbre récepteur tubulaire (6) et l'autre auxdits arbres alignés (4, 5) par l'intermédiaire d'un troisième train planétaire (17, 32) jouant le rôle d'un différentiel, caractérisé en ce que, les trois trains (10, 12, 17; 30, 31, 32) étant plats, à engrenages cylindriques, et l'arbre tubulaire récepteur (6) entourant l'arbre tubulaire moteur (3), le train réducteur (10, 30) est interposé axialement entre les deux autres trains (12, 17; 31, 32) dont les couronnes dentées (14, 16; 39, 40) sont accouplées ou susceptibles de l'être, par une entretoise tubulaire (15, 38) entourant le train réducteur (10, 30).

2. Ensemble selon la revendication 1, caractérisé en ce qu'il comprend un manchon (23) coulissant de commande du train réducteur (10, 30), c'est-à-dire solidaire du pignon planétaire (22) ou de la couronne dentée (34) du premier train (10, 30), et propre à être accouplé alternativement avec un autre élément (26, 36) de ce train ou avec une partie fixe (24), ce manchon (23) étant interposé radialement entre les arbres tubulaires moteur (3) et récepteur (6).

3. Ensemble selon la revendication 1, caractérisé en ce que le porte-satellites (11) du train répartiteur (12, 31) comporte une denture périphérique (28) propre à coopérer avec la couronne dentée (14, 39) de ce train (12, 31), cette couronne (14) étant coulissante.

4. Ensemble selon la revendication 3, caractérisé en ce que la couronne coulissante est soit monopièce (14) avec l'entretoise (15) et la couronne dentée (16) du troisième train (17), soit (39) reliée à l'entretoise (38) par un moyen d'accouplement coulissant (42, 43).

## Patentansprüche

1. Kraftübertragungsaufbau für ein Fahrzeug mit zwei angetriebenen Achsen, der eine rohrförmige Antriebswelle, insbesondere eine Ausgangswelle (3) eines querliegenden Fahrzeugtriebwerks (G), einerseits mit zwei koaxial zur Antriebswelle (3) ausgerichteten und insbesondere entsprechend mit den Rädern einer ersten Fahrzeugachse verbundenen angetriebenen Wellen (4, 5) und andererseits mit einer rohrförmigen angetriebenen Welle (6), die eine der ausgerichteten Wellen (4, 5) umgibt und insbesondere über ein Kegelradpaar (8) mit einer Längswelle (7) für den Antrieb der Räder einer zweiten Fahrzeugachse verbunden ist, verbindet, wobei dieser Aufbau ein erstes zweistufiges Untersetzungsplanetengetriebe (10, 30) aufweist, das die Antriebswelle (3) mit dem Satellitenträger (11) eines zweiten Drehmomentverteilergetriebes (12, 31) verbindet, dessen Hohlrad (14, 39) mit der rohrförmigen angetriebenen Welle (6) bzw. mit den ausgerichteten Wellen (4, 5) über ein drittes, die Rolle eines Differentials spielendes Planetengetriebe (17, 32) verbunden sind, dadurch gekennzeichnet, dass, wobei die drei Getriebe (10, 12, 17; 30, 31, 32) flach und in Stirnradaufbau vorgesehen sind und die rohrförmige angetriebene Welle (6) die rohrförmige Antriebswelle (3) umgibt, das Untersetzungsgetriebe (10, 30) axial zwischen den beiden anderen Getrieben (12, 17; 31, 32) liegt, deren Hohlräder (14, 16; 39, 40) durch ein das Untersetzungsgetriebe (10, 30) umgebendes rohrförmiges Zwischenstück (15, 38) gekuppelt oder kuppelbar sind.

2. Aufbau nach Anspruch 1, dadurch gekennzeichnet, dass er eine Schiebemuffe (23) zur Steuerung des Untersetzungsgetriebes (10, 30), d.h. fest verbunden mit dem Planetenrad (22) oder dem Hohlrad (34) des ersten Getriebes (10, 30) und geeignet für ein wechselweises Kuppeln mit einem anderen Teil (26, 36) dieses Getriebes oder mit einem feststehenden Teil (24), aufweist, wobei diese Muffe (23) radial zwischen der rohrförmigen Antriebswelle (3) und angetriebenen Welle (6) liegt.

3. Aufbau nach Anspruch 1, dadurch gekennzeichnet, dass der Satellitenträger (11) des Verteilergetriebes (12, 31) eine Umfangsverzahnung (28) aufweist, die für ein Zusammenwirken mit dem Hohlrad (14, 39) dieses Getriebes (12, 31) geeignet ist, wobei dieses Hohlrad (14) verschiebbar ist.

4. Aufbau nach Anspruch 3, dadurch gekennzeichnet, dass das verschiebbare Hohlrad entweder mit dem Zwischenstück (15) und dem Hohlrad (16) des dritten Getriebes (17) einstückig (14) ausgebildet ist oder mit dem Zwischenstück (38) über eine Schiebekupplungseinrichtung (42, 43) verbunden ist.

## Claims

1. A transmission assembly for a vehicle having two driving axles, connecting a tubular driving shaft, in particular an output shaft (3) of a transverse vehicle engine-drive unit (G), on one hand to two receiving shafts (4, 5) aligned coaxially with the driving shaft (3) and, in particular, respectively connected to the two wheels of a first axle of the vehicle, on the other hand, to a tubular receiving shaft (6) surrounding one of the aligned shafts (4, 5), and connected in particular by a couple of bevel gears (8) to a longitudinal shaft (7) for driving the wheels of a second axle of the vehicle, this assembly comprising a first speed-reducing planet gear train (10, 30) having two ratios connecting the driving shaft (3) to the planet gear carrier (11) of a second torque-distributing train (12, 31) whose sun gear (13) and ring gear (14, 39) are respectively connected, one to the tubular receiving shaft (6) and the other to said aligned shafts (4, 5) through a third planet gear train (17, 32) performing the function of a differential, characterised in that, as the three trains (10, 12, 17; 30, 31, 32) are flat and have cylindrical gears and the tubular receiving shaft (6) surrounds the driving tubular shaft (3), the speed-reducing train (10, 30) is axially interposed between the other two trains (12, 17; 31, 32) whose ring gears (14, 16; 39, 40) are coupled, or are capable of being coupled, by a tubular strut (15, 38) surrounding the speed-reducing train (10, 30).

2. An assembly according to claim 1, characterised in that it comprises a sliding sleeve (23) controlling the speed-reducing train (10, 30), i.e. integral with the sun gear (22) or the ring gear (34) of the first train (10,30) and capable of being coupled alternately with another element (26, 36) of this train or with a fixed part (24), this sleeve (23) being radially interposed between the driving (3) and receiving (6) tubular shafts.

3. An assembly according to claim 1, characterised in that the planet gear carrier (11) of the distributing train (12, 31) comprises a peripheral set of teeth (28) capable of cooperating with the ring gear (14, 39) of this train (12, 31), this ring gear (14) being slidable.

4. An assembly according to claim 3, characterised in that the slidable ring gear is either in one piece (14) with the strut (18) and the ring gear (16) of the third train (17) or (39) connected to the strut (38) by a slidable coupling means (42, 43).

4

# FIG.1

FIG.2

FIG.3